# EUROPEAN PATENT APPLICATION

(11) **EP 4 184 322 A1**
(43) Date of publication of application: **24.05.2023**
(21) Application number: 21842778.9
(22) Date of filing: 08.07.2021
(51) Int. Cl.: G06F 9/48

(54) **DATA PROCESSING METHOD AND APPARATUS, AND DEVICE AND STORAGE MEDIUM**

(30) Priority: 15.07.2020 CN 202010682651
(71) Applicant: ALIBABA GROUP HOLDING LIMITED, George Town, Grand Cayman (KY)
(72) Inventor: HAO, Shuwei, Hangzhou, Zhejiang 311121 (CN); LI, Peng, Hangzhou, Zhejiang 311121 (CN); CHEN, Xianlu, Hangzhou, Zhejiang 311121 (CN)
(74) Representative: Patentgruppen A/S
(86) International application number: PCT/CN2021/105163
(87) International publication number: WO 2022/012404

(57) **Abstract**

A data processing method and apparatus, and a device and a storage medium. The method comprises: determining copy scheduling information of an application according to the number of copies of the application and core deployment information of core nodes corresponding to a service node (202), wherein the copy scheduling information comprises correspondence between an application copy of the application and a core node; creating at least one scheduling task (204); and executing the scheduling task, so as to allocate a corresponding core node to the application copy of the application according to the copy scheduling information (206). By means of the method, the processing performance is improved.

## Description

This application claims priority to Chinese Patent Application No. 202010682651.9, filed on 15 July 2020 and entitled "DATA PROCESSING METHOD AND APPARATUS, DEVICE, AND STORAGE MEDIUM," which is incorporated herein by reference in its entirety.

### TECHNICAL FIELD

The present application relates to the field of communication technology, and, more particularly, to a data processing method, a data processing apparatus, an electronic device, and a storage medium.

### BACKGROUND

Under a cloud computing architecture, the central processing unit (CPU) of a service node is usually a multi-core CPU with large memory and good performance. Therefore, when users use a cloud computing service, an application can be deployed on the service node to use the CPU, memory, and other processing capabilities of the service node.

Currently, applications deployed on a service node are usually multi-copy applications, and each application copy corresponds to an application process and is bound to the same CPU on the service node. For example, each application is bound to CPU0 - CPU103. In addition, the multi-core CPU on the service node uses a non-uniform memory access (NUMA) architecture. Under the NUMA architecture, CPU resources are divided in units of nodes. Each node has independent resources such as CPU cores and memory. However, if the node resources are accessed across the NUMA architecture, there will be a problem of performance degradation.

In the above-described method, the multi-core CPU bound to the application copy is divided into multiple nodes, and the corresponding application may be deployed across nodes, which will lead to the problem of reduced memory access throughput and affect the performance of the application.

### SUMMARY

Embodiments of the present application provide a data processing method to solve the problem of performance degradation due to the deployment of multi-copy applications in the prior art.

Correspondingly, embodiments of the present application further provide a data processing apparatus, an electronic device, and a storage medium, so as to ensure the implementation and application of the above-mentioned method.

In order to solve the above-mentioned problem, an embodiment of the present application discloses a data processing method, comprising: determining, according to the number of copies of an application and core deployment information of core nodes corresponding to service nodes, copy scheduling information of the application, wherein the copy scheduling information comprises correspondences between application copies of the application and the core nodes; creating at least one scheduling task; and executing the scheduling task to allocate corresponding core nodes for the application copies of the application according to the copy scheduling information.

In order to solve the above-mentioned problem, an embodiment of the present application discloses a data processing method, comprising: receiving copy scheduling information of an application, wherein the copy scheduling information comprises correspondences between application copies of the application and core nodes; creating a scheduling task for the application copies; and executing the scheduling task to allocate corresponding core nodes for the application copies according to the copy scheduling information.

In order to solve the above-mentioned problem, an embodiment of the present application discloses a data processing method, comprising: determining, according to an application deployment instruction for a multi-process application, service nodes corresponding to the multi-process application, wherein the service nodes comprise elastic bare metal server nodes; determining, according to the number of copies of the multi-process application and core deployment information of core nodes corresponding to the service nodes, copy scheduling information of the multi-process application, wherein the copy scheduling information comprises correspondences between application copies of the multi-process application and the core nodes; creating at least one scheduling task; and executing the scheduling task to allocate corresponding core nodes for the application copies of the multi-process application according to the copy scheduling information.

In order to solve the above-mentioned problem, an embodiment of the present application discloses a data processing apparatus, comprising: a scheduling information determination module, configured to determine, according to the number of copies of an application and core deployment information of core nodes corresponding to service nodes, copy scheduling information of the application, wherein the copy scheduling information comprises correspondences between application copies of the application and the core nodes; a scheduling task determination module, configured to create at least one scheduling task; and a scheduling processing module, configured to execute the scheduling task to allocate corresponding core nodes for the application copies of the application according to the copy scheduling information.

In order to solve the above-mentioned problem, an embodiment of the present application discloses a data processing apparatus, comprising: a scheduling information receiving module, configured to receive copy scheduling information of an application, wherein the copy scheduling information comprises correspondences between application copies of the application and core nodes; a scheduling task generation module, configured to create a scheduling task for the application copies; and a scheduling execution module, configured to execute the scheduling task to allocate corresponding core nodes for the application copies according to the copy scheduling information.

In order to solve the above-mentioned problem, an embodiment of the present application discloses a data processing apparatus, comprising: an application deployment module, configured to determine, according to an application deployment instruction for a multi-process application, service nodes corresponding to the multi-process application, wherein the service nodes comprise elastic bare metal server nodes; a scheduling information acquisition module, configured to determine, according to the number of copies of the multi-process application and core deployment information of core nodes corresponding to the service nodes, copy scheduling information of the multi-process application, wherein the copy scheduling information comprises correspondences between application copies of the multi-process application and the core nodes; a scheduling task creation module, configured to create at least one scheduling task; and a scheduling allocation module, configured to execute the scheduling task to allocate corresponding core nodes for the application copies of the multi-process application according to the copy scheduling information.

In order to solve the above-mentioned problem, an embodiment of the present application discloses an electronic device, comprising: a processor; and a memory having executable instructions stored thereon, wherein when the executable instructions are executed, the processor is caused to execute the method according to one or more of the above-described embodiments.

In order to solve the above-mentioned problem, an embodiment of the present application discloses one or more machine-readable media having executable instructions stored thereon, wherein when the executable instructions are executed, a processor is caused to execute the method according to one or more of the above-described embodiments.

Compared with the prior art, the embodiments of the present application have the following advantages.

In the embodiments of the present application, according to the number of copies of an application and core deployment information of core nodes corresponding to service nodes, copy scheduling information of the application is determined, so that correspondences between application copies and the core nodes may be pre-deployed; and then, a scheduling task is created and executed to allocate corresponding core nodes for the application copies of the application according to the copy scheduling information, so that the application copies are processed on one core node, thereby avoiding the problem of processing across core nodes and improving the processing performance.

### BRIEF DESCRIPTION OF DRAWINGS

FIG. 1 is a schematic diagram of a data processing method according to an embodiment of the present application;
FIG. 2 is a schematic flowchart of a data processing method according to an embodiment of the present application;
FIG. 3 is a schematic flowchart of a data processing method according to another embodiment of the present application;
FIG. 4 is a schematic flowchart of a data processing method according to still another embodiment of the present application;
FIG. 5 is a schematic flowchart of a data processing method according to a further embodiment of the present application;
FIG. 6 is a schematic structural diagram of a data processing apparatus according to an embodiment of the present application;
FIG. 7 is a schematic structural diagram of a data processing apparatus according to another embodiment of the present application;
FIG. 8 is a schematic structural diagram of a data processing apparatus according to still another embodiment of the present application; and
FIG. 9 is a schematic structural diagram of an exemplary apparatus according to an embodiment of the present application.

### DESCRIPTION OF EMBODIMENTS

In order to make the above-mentioned objectives, features, and advantages of the present application more easily understood, the present application will be further described in detail below with reference to the accompanying drawings and embodiments.

The embodiments of the present application may be applied to an application processing scenario of a service node of a multi-core CPU in a cloud computing architecture. The application may be one of various applications that use the service node in the cloud computing architecture to perform services, such as an enterprise application and other software. The multi-core CPU of the service node in the cloud computing architecture uses a NUMA architecture, so that the multi-core CPU of the service node can be divided into more than one core node. For example, the multi-core CPU of the service node comprises one hundred four cores, namely CPU0 - CPU103, which can be correspondingly divided into 4 core nodes. Therefore, the core node node 1 comprises CPU0 - CPU25, the core node node2 comprises CPU26 - CPU51, the core node node3 comprises CPU52 - CPU77, and the core node node4 comprises CPU78 - CPU103.

Depending on the specific needs, the service nodes according to the embodiments of the present application may comprise elastically scalable high-performance computing service nodes, on which multi-process applications can be deployed and scheduled, and may also be applied to other service nodes that schedule large-scale application instances. The multi-process application may comprise multiple application copies, each of which corresponds to one worker process.

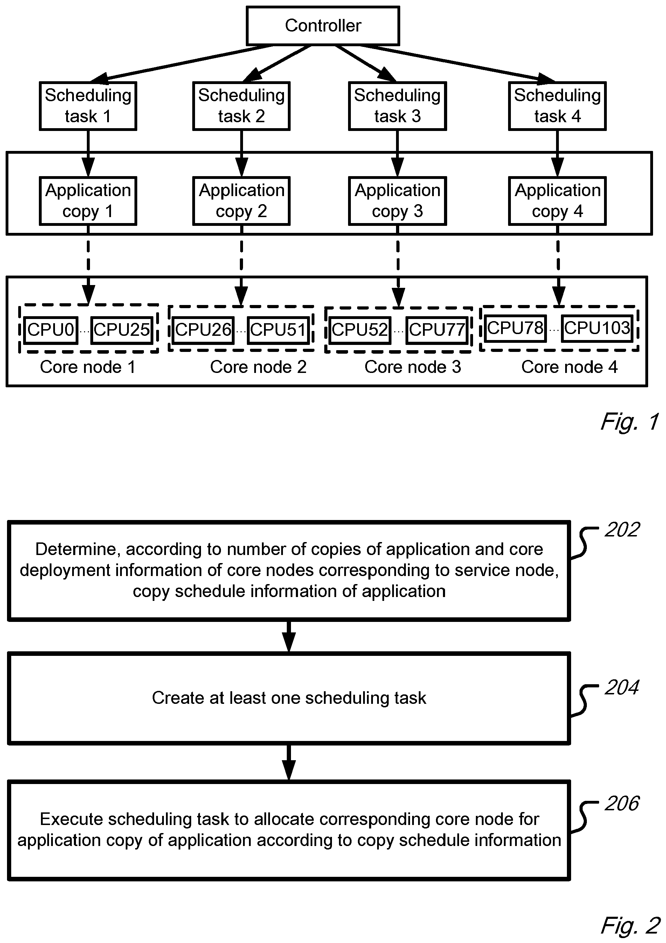

As shown in FIG. 1, the application in the embodiment of the present application comprises multiple application copies, each of which corresponds to one worker process. The CPU of the service node is a multi-core CPU that uses a NUMA architecture. Therefore, the multi-core CPU of the service node can be divided into multiple core nodes. As shown in FIG. 1, the one hundred four cores, namely CPU0 - CPU103, can be divided into 4 core nodes respectively. In order to improve the processing performance of a multi-copy application (or a multi-process application) in the embodiment of the present application, a controller may be provided, which can also be referred to as a Cgroups controller, wherein the CPU groups may be understood as core nodes to deploy and schedule applications on service nodes. The Cgroups are a mechanism provided by the Linux core, which can integrate (or separate) a series of system tasks and their subtasks into different groups which are classified by a rule such as resources according to requirements, thereby providing a unified framework for system resource management. Cgroups can limit and record physical resources used by task groups. The controller can determine the number of copies of the application and core deployment information on the service node, wherein the core deployment information is the deployment information of the multi-core CPU on the service node based on the NUMA architecture, and comprises: the number of CPU cores, the number of core nodes, and multiple CPU cores corresponding to each of the core nodes. The division of the core nodes can be confirmed according to the core deployment information, thereby assisting in scheduling of the application. Correspondingly, based on the number of copies of the application and the core deployment information of the service node, the controller can allocate core nodes corresponding to application copies, wherein each of the application copies corresponds to one core node, and each of the core nodes may correspond to one or more application copies. Therefore, when the worker process corresponding to each of the application copies executes the processing of the application, a CPU core can be selected on the allocated core node to execute the processing, and the situation of execution across different CPU core nodes will not occur, thereby improving the processing performance.

As shown in FIG. 2, the embodiment of the present application provides a data processing method, which can execute the following steps:
Step 202: determine, according to the number of copies of an application and core deployment information of core nodes corresponding to a service node, copy scheduling information of the application, wherein the copy scheduling information comprises correspondences between application copies of the application and the core nodes.

When a user uploads an application to a service node and wants to use resources of the service node, the number of copies of the application can be uploaded, wherein the number of copies refers to the number of application copies of the application. In other examples, the number of copies of the application copy of the application can also be detected based on the application that has been run, so that the controller can acquire the number of copies of the application on the service node.

The service node can also acquire core deployment information of its multi-core CPU, and determine correspondences between the service node and core nodes, and correspondences between each of the core nodes and CPU cores. As shown in FIG. 1, based on the core deployment information, it can be determined that the multi-core CPU of the service node comprises one hundred four cores, namely CPU0 - CPU103, which are divided into 4 core nodes respectively: the core node node1 comprises CPU0 - CPU25, the core node node2 comprises CPU26 - CPU51, the core node node3 comprises CPU52 - CPU77, and the core node node4 comprises CPU78 - CPU103.

Then, according to the number of copies and the core deployment information of the service node, the controller can allocate corresponding application copies for processor cores, so as to determine copy scheduling information. The copy scheduling information comprises correspondences between the application copies of the application and the core nodes, and may also be referred to as a Cgroups definition file.

In an optional embodiment, determining, according to the number of copies of an application and core deployment information of core nodes corresponding to service nodes, copy scheduling information of the application comprises: receiving the number of the copies of the application, and acquiring the core deployment information of the core nodes corresponding to the service nodes; determining, according to the number of the copies and the core deployment information, at least one application copy corresponding to each of the core nodes; and generating, according to the correspondences between the core nodes and the application copies, the copy scheduling information of the application. Based on the number of the application copies and the number of the core nodes, a core node can be allocated for each of the application copies. For example, if the number of the application copies is the same as the number of the core nodes, a core node can be allocated for each of the application copies, so that the worker processes corresponding to the application copies will not be processed across core nodes, and different application copies can also use computing resources of different core nodes. Also, for example, if the number of the application copies is less than the number of the core nodes, a core node can be allocated for each of the application copies in a certain order or at random. Similarly, the worker processes corresponding to the application copies will not be processed across core nodes, and different application copies can also use computing resources of different core nodes. Still for example, if the number of the application copies is more than the number of the core nodes, some of the core nodes may correspond to more than one application copy, and the core nodes that process multiple application copies may be determined at random or according to a certain rule, which is not limited in the embodiment of the present application. Further for example, after running for a period of time, it can be determined that each of the application copies corresponds to a use condition of the CPU, and the application copies with a less processing volume are adjusted to be a core node, or the application copies with a reduced processing volume and a large processing volume are adjusted to be a core node, etc., so as to use CPU resources more evenly. In other examples, for correspondences between the application copies and the core nodes, various methods such as average allocation and random allocation may also be used.

After the correspondences between the application copies and the core nodes are determined, corresponding copy scheduling information can be generated to record the correspondences between the application copies and the core nodes.

Step 204: create at least one scheduling task.

After the copy scheduling information of the application is determined, when the application is started, at least one scheduling task can also be created based on the copy scheduling information, and then the scheduling task is bound to the application copies or the core nodes, so as to realize deployment of the application on the core nodes.

The controller can create scheduling tasks according to the application copies, or create scheduling tasks according to the core nodes. In an optional embodiment, the controller can create a scheduling task for each of the application copies of the application; and can also create a scheduling task for each of the application copies according to the number of the application copies. In another optional embodiment, the controller can respectively create a scheduling task for each of the core nodes corresponding to the application; and can also create a scheduling task for each of the core nodes according to the number of the core nodes.

Step 206: execute the scheduling task to allocate a corresponding core node for an application copy of the application according to the copy scheduling information.

By executing the scheduling task, corresponding core nodes can be allocated for the application copies according to the copy scheduling information, so that the application copies can call the CPU in the core nodes to process the application. Since each of the application copies corresponds to one core node, processing will not be performed across core nodes.

The controller can create multiple scheduling tasks, execute the scheduling tasks, determine the correspondences between the application copies and the core nodes according to the copy scheduling information, and allocate the application copies to the corresponding core nodes, so that the application copies can call processor cores included in the allocated core nodes for processing, which can avoid the problem that the application copies are processed across core nodes.

Taking each of the application copies to create a scheduling task respectively as an example, by executing the scheduling task, the application copy can be deployed on the core node specified in the copy scheduling information, so that the processing required by the application copy can be performed by calling a CPU core in the specified core node.

Taking each of the core nodes to create a scheduling task respectively as an example, by executing the scheduling task, at least one of the application copies specified by the core node in the copy scheduling information can be allocated to the core node, so that the processing required by the application copy can be performed by calling a CPU core in the specified core node.

In the example as shown in FIG. 1, each of the application copies is allocated to a corresponding core node, wherein the processing of the application copy 1 is performed by selecting a CPU core from CPU0 - CPU25 on the core node 1; the processing of the application copy 2 can be performed by selecting any CPU core from CPU26 - CPU51 on the core node 2; the processing of the application copy 3 can be performed by selecting any CPU core from CPU52 - CPU77 on the core node 3; and the processing of the application copy 4 can be performed by selecting any CPU core from CPU78 - CPU103 on the core node 4.

In some optional embodiments, applications can also be scheduled. In the process of processing multiple applications, the applications can be scheduled to multiple corresponding service nodes for processing, thereby reducing the problem that application copies of the multiple applications share one core node, and further improving the processing performance.

In the embodiment of the present application, according to the number of copies of an application and core deployment information of processors corresponding to service nodes, copy scheduling information of the application is determined, so that correspondences between application copies and core nodes can be pre-deployed; and then, a scheduling task is created and, according to the scheduling task and the copy scheduling information, processor cores are scheduled for the application copies of the application, so that the application copies can be processed on one core node, avoiding the problem of processing across core nodes and improving the processing performance.

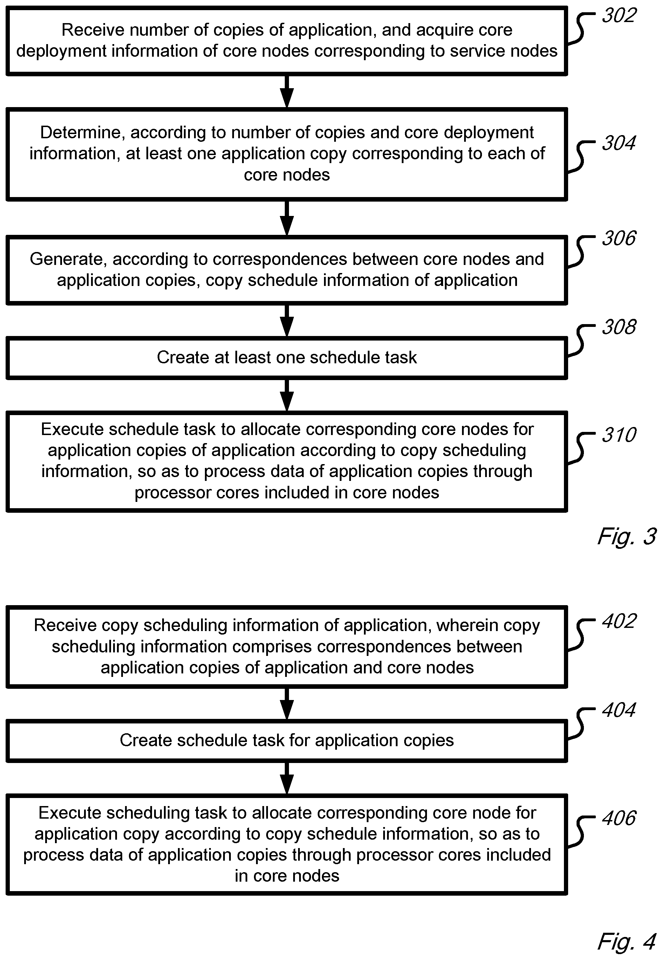

On the basis of the above-described embodiments, the present application further provides a data processing method, which can allocate application copies for applications on service nodes in a NUMA architecture, thereby improving the processing performance of the applications on the service nodes. As shown in FIG. 3, the method comprises:
Step 302: receive the number of the copies of the application, and acquire the core deployment information of the core nodes corresponding to the service nodes.
Step 304: determine, according to the number of the copies and the core deployment information, at least one application copy corresponding to each of the core nodes.
Step 306: generate, according to the correspondences between the core nodes and the application copies, the copy scheduling information of the application.
Step 308: create a scheduling task for each of the application copies.

In the embodiment, a scheduling task is created for each of the application copies as an example. In other examples, a scheduling task may also be created for each of the core nodes, which may be determined according to requirements.

Step 310: execute the scheduling task to allocate a corresponding core node for an application copy of the application according to the copy scheduling information, so as to process data of the application copies through processor cores included in the core nodes.

The scheduling task deploys the application copies to the core nodes specified in the copy scheduling information, so that the processing required by each of the application copies can be performed by calling a CPU core in the allocated and specified core node, avoiding the problem of processing across core nodes and improving the processing performance of the application.

In the embodiment of the present application, the number of the copies of the application is determined according to the deployment of the multi-copy application; and the core deployment information of the core nodes corresponding to the service nodes is determined according to the division of the processor. Then, according to the number of the copies and the core deployment information, the correspondences between the core nodes and the application copies are determined to generate the copy scheduling information. The scheduling task is created by a data processing apparatus, through which corresponding core nodes are allocated for the application copies according to the copy scheduling information. The embodiment of the present application can schedule the application copies to the corresponding core nodes for processing, thereby avoiding the problem of processing across core nodes and improving the processing performance of the processor.

In other embodiments, a user configuration method is also provided for users, and the copy scheduling information supports user-defined implementation, such as providing some pages or setting methods for the users, so that the users can determine the correspondences between the application copies and the core nodes based on the core deployment information of the used service nodes and the number of the copies of the application, and corresponding copy scheduling information is generated. In other examples, some default copy scheduling information can also be provided, and the users can adjust the binding relationship between the application and the core nodes automatically based on their needs, which is easy to use and implement.

Referring to FIG. 4, it shows a flowchart of the steps of still another data processing method embodiment of the present application.

Step 402: receive copy scheduling information of an application, wherein the copy scheduling information comprises correspondences between application copies of the application and core nodes;
User-defined or system-default copy scheduling information is received, wherein the copy scheduling information comprises correspondences between application copies and core nodes.

The step of determining the copy scheduling information comprises: receiving the number of the copies of the application, and acquiring the core deployment information of the core nodes corresponding to the service nodes; determining, according to the number of the copies and the core deployment information, at least one application copy corresponding to each of the core nodes; and generating, according to the correspondences between the core nodes and the application copies, the copy scheduling information of the application.

Step 404: create a scheduling task for the application copies.

A scheduling task can be created for each of the application copies.

Step 406: execute the scheduling task to allocate a corresponding core node for an application copy according to the copy scheduling information, so as to process data of the application copies through processor cores included in the core nodes.

In an optional embodiment, the scheduling task determines the corresponding core nodes allocated for the application copies of the application according to the copy scheduling information, and schedules worker processes corresponding to the application copies to the core nodes.

The scheduling task deploys the application copies to the core nodes specified in the copy scheduling information, so that the processing required by each of the application copies can be performed by calling a CPU core in the allocated and specified core node, avoiding the problem of processing across core nodes and improving the processing performance of the application.

The embodiment of the present application adjusts underlying resources of the server end, for example, the processing end such as the service node, to complete optimized scheduling of the application, and the upper-layer application does not perceive the process. Resource scheduling is implemented based on the NUMA architecture, and the application copies are allocated in combination with the core deployment information of the NUMA architecture, which effectively avoids the problem of processing across core nodes.

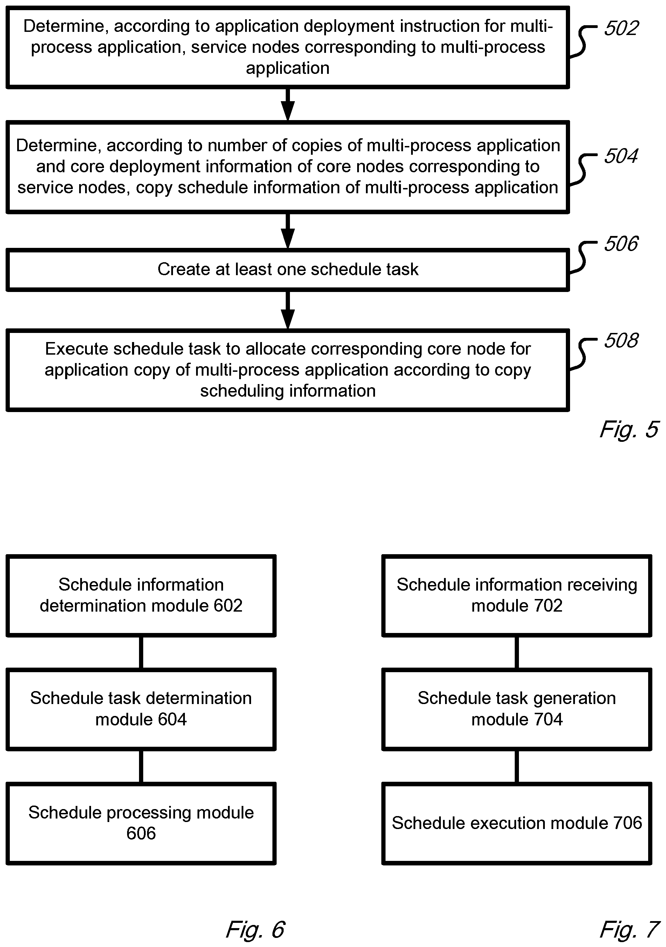

On the basis of the above-described embodiments, the present application also provides a data processing method, which can complete the scheduling between the application copies and the core nodes according to the instruction of a user to deploy the application. As shown in FIG. 5, the method comprises:
Step 502: determine, according to an application deployment instruction for a multi-process application, service nodes corresponding to the multi-process application, wherein the service nodes comprise elastic bare metal server nodes.
Step 504: determine, according to the number of copies of the multi-process application and core deployment information of core nodes corresponding to the service nodes, copy scheduling information of the multi-process application, wherein the copy scheduling information comprises correspondences between application copies of the multi-process application and the core nodes.

The step of determining the copy scheduling information comprises: receiving the number of the copies of the application, and acquiring the core deployment information of the core nodes corresponding to the service nodes; determining, according to the number of the copies and the core deployment information, at least one application copy corresponding to each of the core nodes; and generating, according to the correspondences between the core nodes and the application copies, the copy scheduling information of the application.

Step 506: create at least one scheduling task.

In an embodiment, a scheduling task may be created for each of the application copies. In other examples, a scheduling task may also be created for each of the core nodes, which may be determined according to requirements.

Step 508: execute the scheduling task to allocate a corresponding core node for an application copy of the multi-process application according to the copy scheduling information.

In the embodiment of the present application, before deploying the multi-process application, the user can apply for an elastic bare metal server node first, and then deploy the application to the node. In an example, the user can input an application deployment instruction, and the controller parses node information of the elastic bare metal server node included in the application deployment instruction to determine the node and deploy the application to the node. In another example, after the user applies for the elastic bare metal server node, the controller can bind the user to the elastic bare metal server, and when the user deploys the application (the user inputs the application deployment instruction), determines the elastic bare metal server node bound to the user, so as to deploy the application on the node. The number of the copies of the application can be determined according to the deployment of the multi-copy application; and the core deployment information of the core nodes corresponding to the service nodes can be determined according to the division of the processor. Then, according to the number of the copies and the core deployment information, the correspondences between the core nodes and the application copies are determined to generate the copy scheduling information. The scheduling task is created by a data processing apparatus, through which corresponding core nodes are allocated for the application copies according to the copy scheduling information. The embodiment of the present application can schedule the application copies to the corresponding core nodes for processing, thereby avoiding the problem of processing across core nodes and improving the processing performance of the processor.

It should be noted that with regard to the method embodiments, in order to provide a concise description, the method embodiments are all expressed as a series of action combinations. Those skilled in the art, however, should know that the embodiments of the present application are not limited by the described sequence of actions as some steps may be executed in another sequence or simultaneously according to the embodiments of the present application. Secondly, those skilled in the art should also know that the embodiments described in the specification are all preferred embodiments, and the involved actions are not necessarily required by the embodiments of the present application.

On the basis of the above-described embodiments, the embodiment also provides a data processing apparatus, as shown in FIG. 6, which may specifically comprise the following modules.

A scheduling information determination module 602, configured to determine, according to the number of copies of an application and core deployment information of core nodes corresponding to service nodes, copy scheduling information of the application, wherein the copy scheduling information comprises correspondences between application copies of the application and the core nodes.

A scheduling task determination module 604, configured to create at least one scheduling task.

A scheduling processing module 606, configured to execute the scheduling task to allocate corresponding core nodes for the application copies of the application according to the copy scheduling information.

To sum up, in the embodiment of the present application, according to the number of copies of an application and core deployment information of core nodes corresponding to service nodes, copy scheduling information of the application is determined; and a scheduling task is created. The scheduling task is executed to allocate corresponding core nodes for the application copies of the application according to the copy scheduling information. The embodiment of the present application can schedule the application copies to the corresponding core nodes for processing, which not only avoids the problem of multiple application processes sharing one core node, but also avoids the problem of processing the application across core nodes, thereby improving the processing performance of the processor.

On the basis of the above-described embodiments, the embodiment also provides a data processing apparatus, which may specifically comprise the following modules.

An information receiving module, configured to receive the number of the copies of the application, and acquire the core deployment information of the core nodes corresponding to the service nodes.

A node matching module, configured to determine, according to the number of the copies and the core deployment information, at least one application copy corresponding to each of the core nodes.

An information generation module, configured to generate, according to the correspondences between the core nodes and the application copies, the copy scheduling information of the application.

A task creation module, configured to create at least one scheduling task. The data processing apparatus can create a scheduling task for each of the application copies, and can also create a scheduling task for each of the core nodes.

An allocation execution module, configured to execute the scheduling task to allocate corresponding core nodes for the application copies of the application according to the copy scheduling information, so as to process data of the application copies through processor cores included in the core nodes.

In the embodiment of the present application, the data processing apparatus can determine the number of the copies of the application according to the deployment of the multi-copy application, and determine the core deployment information of the core nodes corresponding to the service nodes according to the division of the core nodes. Then, according to the number of the copies and the core deployment information, the correspondences between the core nodes of the service nodes and the application copies are determined to generate copy the copy scheduling information. The data processing apparatus creates and executes the scheduling task to allocate corresponding core nodes for the application copies according to the copy scheduling information. The embodiment of the present application can schedule the application copies to the corresponding core nodes for processing, thereby avoiding the problem of processing across nodes and improving the processing performance of the processor.

On the basis of the above-described embodiments, the embodiment also provides a data processing apparatus, as shown in FIG. 7, which may specifically comprise the following modules.

A scheduling information receiving module 702, configured to receive copy scheduling information of an application, wherein the copy scheduling information comprises correspondences between application copies of the application and core nodes.

A scheduling task generation module 704, configured to create a scheduling task for the application copies.

A scheduling execution module 706, configured to execute the scheduling task to allocate corresponding core nodes for the application copies according to the copy scheduling information.

To sum up, in the embodiment of the present application, user-defined copy scheduling information can be received, and a scheduling task can be created. Then, by executing the scheduling task, corresponding core nodes can be allocated for the application copies according to the copy scheduling information, and the application copies can be scheduled to the corresponding core nodes for processing, thereby avoiding the problem of processing across nodes and improving the processing performance of the processor.

The embodiment of the present application adjusts underlying resources of the server end, for example, the processing end such as the service node, to complete optimized scheduling of the application, and the upper-layer application does not perceive the process. Resource scheduling is implemented based on the NUMA architecture, and the application copies are allocated in combination with the core deployment information of the NUMA architecture, which effectively avoids the problem of processing across core nodes.

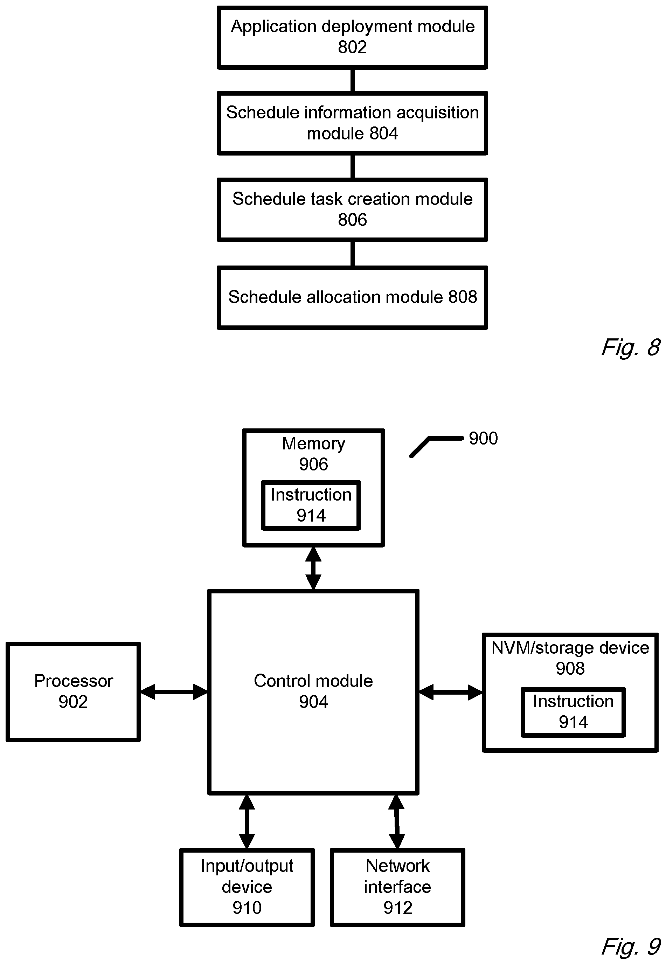

On the basis of the above-described embodiments, the embodiment also provides a data processing apparatus, as shown in FIG. 8, which may specifically comprise the following modules.

An application deployment module 802, configured to determine, according to an application deployment instruction for a multi-process application, service nodes corresponding to the multi-process application, wherein the service nodes comprise elastic bare metal server nodes.

A scheduling information acquisition module 804, configured to determine, according to the number of copies of the multi-process application and core deployment information of core nodes corresponding to the service nodes, copy scheduling information of the multi-process application, wherein the copy scheduling information comprises correspondences between application copies of the multi-process application and the core nodes.

A scheduling task creation module 806, configured to create at least one scheduling task.

A scheduling allocation module 808, configured to execute the scheduling task to allocate corresponding core nodes for the application copies of the multi-process application according to the copy scheduling information.

In the embodiment of the present application, before deploying the multi-process application, the user can apply for an elastic bare metal server node first, and then deploy the application to the node. In an example, the user can input an application deployment instruction, and the controller parses node information of the elastic bare metal server node included in the application deployment instruction to determine the node and deploy the application to the node. In another example, after the user applies for the elastic bare metal server node, the controller can bind the user to the elastic bare metal server, and when the user deploys the application (the user inputs the application deployment instruction), determines the elastic bare metal server node bound to the user, so as to deploy the application on the node. The number of the copies of the application can be determined according to the deployment of the multi-copy application; and the core deployment information of the core nodes corresponding to the service nodes can be determined according to the division of the processor. Then, according to the number of the copies and the core deployment information, the correspondences between the core nodes and the application copies are determined to generate the copy scheduling information. The scheduling task is created by a data processing apparatus, through which corresponding core nodes are allocated for the application copies according to the copy scheduling information. The embodiment of the present application can schedule the application copies to the corresponding core nodes for processing, thereby avoiding the problem of processing across core nodes and improving the processing performance of the processor.

An embodiment of the present application further provides a non-volatile readable storage medium in which one or more modules (programs) are stored, and applying the one or more modules on a device enables the device to execute instructions of each method step in the embodiments of the present application.

An embodiment of the present application provides one or more machine-readable media on which instructions are stored and when executed by one or more processors, cause an electronic device to perform the method according to one or more of the above-described embodiments. In the embodiment of the present application, the electronic device comprises various types of devices such as terminal devices and servers (clusters).

The embodiments of the present application may be implemented as an apparatus that uses any suitable hardware, firmware, software, or any combination thereof to form a desired configuration, and the apparatus may comprise electronic devices such as terminal devices and servers (clusters). FIG. 9 schematically shows an exemplary apparatus 900 that may be used to implement the embodiments described in the present application.

In an embodiment, FIG. 9 shows an exemplary apparatus 900 having one or more processors 902, a control module (chipset) 904 coupled to at least one of the (one or more) processor(s) 902, a memory 906 coupled to the control module 904, a non-volatile memory (NVM)/storage device 908 coupled to the control module 904, one or more input/output devices 910 coupled to the control module 904, and a network interface 912 coupled to the control module 904.

The processor 902 may comprise one or more single-core or multi-core processors, and may comprise any combination of general-purpose processors or special-purpose processors (for example, graphics processors, application processors, baseband processors, etc.). In some embodiments, the apparatus 900 can serve as a device such as the terminal device and the server (cluster) described in the embodiments of the present application.

In some embodiments, the apparatus 900 may comprise one or more computer-readable media (for example, the memory 906 or the NVM/storage device 908) having instructions 914 and the one or more processors 902 compatible with the one or more computer-readable media and configured to execute the instructions 914 to implement modules and accordingly perform the actions described in the present application.

In an embodiment, the control module 904 may comprise any suitable interface controller to provide any suitable interface to at least one of the (one or more) processor(s) 902 and/or any suitable device or component communicating with the control module 904.

The control module 904 may comprise a memory controller module to provide an interface to the memory 906. The memory controller module may be a hardware module, a software module, and/or a firmware module.

The memory 906 may be configured to, for example, load and store data and/or instructions 914 for the apparatus 900. In an embodiment, the memory 906 may comprise any suitable volatile memory, for example, a suitable DRAM. In some embodiments, the memory 906 may comprise a double-data-rate fourth generation synchronous dynamic random-access memory (DDR4SDRAM).

In an embodiment, the control module 904 may comprise one or more input/output controllers to provide an interface to the NVM/storage device 908 and the (one or more) input/output device(s) 910.

For example, the NVM/storage device 908 may be configured to store data and/or instructions 914. The NVM/storage device 908 may comprise any suitable non-volatile memory (for example, flash memory) and/or may comprise any suitable (one or more) non-volatile storage device(s) (for example, one or more hard disk drives (HDDs), one or more compact disc (CD) drives, and/or one or more digital versatile disc (DVD) drives).

The NVM/storage device 908 may comprise storage resources that are physically part of the device on which the apparatus 900 is installed, or may be accessible by the device without necessarily being part of the device. For example, the NVM/storage device 908 may be accessed by the (one or more) input/output device(s) 910 via a network.

The (one or more) input/output device(s) 910 may provide an interface to the apparatus 900 to communicate with any other suitable device. The input/output device(s) 910 may comprise a communication component, an audio component, a sensor component, and the like. The network interface 912 may provide an interface to the apparatus 900 to communicate via one or more networks, and the apparatus 900 may perform wireless communication with one or more components in a wireless network according to any of one or more wireless network standards and/or protocols, for example, by accessing a communication standard-based wireless network, such as Wi-Fi, 2G, 3G, 4G, and 5G, or a combination thereof to perform wireless communication.

In an embodiment, at least one of the (one or more) processor(s) 902 may be packaged with the logic of one or more controllers (for example, memory controller modules) of the control module 904. In an embodiment, at least one of the (one or more) processor(s) 902 may be packaged with the logic of one or more controllers of the control module 904 to form a system-in-package (SiP). In an embodiment, at least one of the (one or more) processor(s) 902 may be integrated with the logic of one or more controllers of the control module 904 on the same mold. In an embodiment, at least one of the (one or more) processor(s) 902 may be integrated with the logic of one or more controllers of the control module 904 on the same mold to form a system-on-chip (SoC).

In various embodiments, the apparatus 900 may be, but is not limited to, a server, desktop computing device, or mobile computing device (for example, a laptop computing device, a hand-held computing device, a tablet computer, a netbook, and the like). In various embodiments, the apparatus 900 may have more or fewer components and/or different architectures. For example, in some embodiments, the apparatus 900 comprises one or more cameras, keyboards, liquid crystal display (LCD) screens (comprising touch screen displays), non-volatile memory ports, multiple antennas, graphics chips, application-specific integrated circuits (ASIC), and speakers.

Here, main control chips may be used as processors or control modules in a detection apparatus, sensor data, location information, and the like are stored in a memory or NVM/storage device, sensor groups can be used as input/output devices, and communication interfaces may comprise network interfaces.

Since the apparatus embodiments are basically similar to the method embodiments, they are described in a more concise manner. For relevant content, reference may be made to the description of the method embodiments.

The various embodiments in this specification are described in a progressive manner, and each embodiment focuses on the differences from other embodiments. Reference may be made to each other for the same and similar parts among the various embodiments.

The embodiments of the present application are described with reference to the flowcharts and/or block diagrams of methods, terminal devices (systems), and computer program products according to the embodiments of the present application. It should be understood that computer program instructions may be used to implement each process and/or each block in the flow charts and/or the block diagrams and a combination of a process and/or a block in the flow charts and/or the block diagrams. These computer program instructions may be provided for a general-purpose computer, a special-purpose computer, an embedded processor, or a processor of another programmable data processing terminal device to generate a machine so that the instructions executed by the computer or the processor of another programmable data processing terminal device generate an apparatus for implementing specified functions in one or more processes in the flowcharts and/or in one or more blocks in the block diagrams.

These computer program instructions may be stored in a computer-readable memory that can instruct a computer or another programmable data processing terminal device to work in a specific manner so that the instructions stored in the computer-readable memory generate an artifact that includes an instruction apparatus. The instruction apparatus implements specified functions in one or more processes in the flowcharts and/or in one or more blocks in the block diagrams.

These computer program instructions may also be loaded onto a computer or another programmable data processing terminal device, so that a series of operation steps are performed on the computer or another programmable terminal device to generate computer-implemented processing. Therefore, the instructions executed on the computer or another programmable terminal device are used to provide steps for implementing specified functions in one or more processes in the flowcharts and/or in one or more blocks in the block diagrams.

Although the preferred embodiments of the present application have been described, those skilled in the art may make additional changes and modifications to these embodiments once they know the basic inventive concepts. Therefore, the appended claims are intended to be construed to comprise the preferred embodiments as well as all changes and modifications that fall within the scope of the embodiments of the present application.

Finally, it should be further noted that relational terms herein, such as first and second, are only used to distinguish one entity or operation from another entity or operation, and do not necessarily require or imply any such actual relationship or order among these entities or operations. Moreover, the term "include," "comprise," or any other variant thereof is intended to encompass non-exclusive inclusion, so that a process, method, product, or terminal device that involves a series of elements comprises not only those elements, but also other elements not explicitly listed, or elements that are inherent to such process, method, product, or terminal device. Unless more limitations are stated, an element defined by the phrase "including a ..." does not exclude the existence of another identical element in the process, method, product, or terminal device that includes the element.

A data processing method, a data processing apparatus, an electronic device, and a storage medium provided by the present application have been described above in detail. The principles and implementation manners of the present application are described with specific examples herein. The description of the embodiments is only used to help understand the method of the present application and its core spirit; meanwhile, for those of ordinary skill in the art, according to the spirit of the present application, changes may be made to the implementation manners and the application scope thereof. In summary, the content of this specification should not be construed as limiting the present application.

## Claims

1. A data processing method, **characterized in that** the method comprises:
determining, according to a number of copies of an application and core deployment information of core nodes corresponding to a service node, copy scheduling information of the application, the copy scheduling information including correspondences between application copies of the application and the core nodes;
creating at least one scheduling task; and
executing the scheduling task to allocate a corresponding core node for an application copy of the application according to the copy scheduling information.

2. The method according to claim 1, **characterized in that** the determining, according to the number of copies of an application and the core deployment information of the core nodes corresponding to the service nodes, the copy scheduling information of the application comprises:
receiving the number of the copies of the application, and acquiring the core deployment information of the core nodes corresponding to the service nodes;
determining, according to the number of the copies and the core deployment information, at least one application copy corresponding to each of the core nodes; and
generating, according to the correspondences between the core nodes and the application copies, the copy scheduling information of the application.

3. The method according to claim 1, **characterized in that** the creating the at least one scheduling task comprises:
creating a scheduling task for each of the application copies of the application; or
creating a scheduling task for each of the core nodes corresponding to the application.

4. A data processing method, **characterized in that** the method comprises:
receiving copy scheduling information of an application, the copy scheduling information including a correspondence between an application copy of the application and a core node;
creating a scheduling task for the application copy; and
executing the scheduling task to allocate the core node for the application copy according to the copy scheduling information.

5. The method according to claim 4, **characterized in that** the executing the scheduling task to allocate the core nodes for the application copy according to the copy scheduling information comprises:
executing the scheduling task to determine the core node allocated for the application copy of the application according to the copy scheduling information; and
scheduling a worker process corresponding to the application copy to the core node.

6. A data processing method, **characterized in that** the method comprises:
determining, according to an application deployment instruction for a multi-process application, a service node corresponding to the multi-process application, wherein the service node comprise an elastic bare metal server node;
determining, according to a number of copies of the multi-process application and core deployment information of core nodes corresponding to the service node, copy scheduling information of the multi-process application, wherein the copy scheduling information comprises correspondences between application copies of the multi-process application and the core nodes;
creating at least one scheduling task; and
executing the scheduling task to allocate a corresponding core node for an application copy of the multi-process application according to the copy scheduling information.

7. A data processing apparatus, **characterized in that** the apparatus comprises:
a scheduling information determination module, configured to determine, according to the number of copies of an application and core deployment information of core nodes corresponding to service nodes, copy scheduling information of the application, wherein the copy scheduling information comprises correspondences between application copies of the application and the core nodes;
a scheduling task determination module, configured to create at least one scheduling task; and
a scheduling processing module, configured to execute the scheduling task to allocate a corresponding core node for an application copy of the application according to the copy scheduling information.

8. A data processing apparatus, **characterized in that** the apparatus comprises:
a scheduling information receiving module, configured to receive copy scheduling information of an application, the copy scheduling information including a correspondence between an application copy of the application and a core node;
a scheduling task generation module, configured to create a scheduling task for the application copy; and
a scheduling execution module, configured to execute the scheduling task to allocate the core node for the application copy according to the copy scheduling information.

9. A data processing apparatus, **characterized in that** the apparatus comprises:
an application deployment module, configured to determine, according to an application deployment instruction for a multi-process application, a service node corresponding to the multi-process application, the service node including an elastic bare metal server node;
a scheduling information acquisition module, configured to determine, according to a number of copies of the multi-process application and core deployment information of core nodes corresponding to the service node, copy scheduling information of the multi-process application, the copy scheduling information including correspondences between application copies of the multi-process application and the core nodes;
a scheduling task creation module, configured to create at least one scheduling task; and
a scheduling allocation module, configured to execute the scheduling task to allocate a corresponding core node for an application copy of the multi-process application according to the copy scheduling information.

10. An electronic device, **characterized in that** the electronic device comprises: a processor; and
a memory having executable instructions stored thereon, wherein when the executable instructions are executed, the processor is caused to execute the method according to one or more of claims 1 to 3 and 6.

11. One or more machine-readable media having executable instructions stored thereon, wherein when the executable instructions are executed, a processor is caused to execute the method according to one or more of claims 1 to 3 and 6.

12. An electronic device, **characterized in that** the electronic device comprises: a processor; and
a memory having executable instructions stored thereon, wherein when the executable instructions are executed, the processor is caused to execute the method according to one or more of claims 4 and 5.

13. One or more machine-readable media having executable instructions stored thereon, wherein when the executable instructions are executed, a processor is caused to execute the method according to one or more of claims 4 and 5.
